# EUROPÄISCHE PATENTSCHRIFT

(11) **EP 3 900 978 B1**
(45) Veröffentlichungstag und Bekanntmachung des Hinweises auf die Patenterteilung: **25.05.2022**
(21) Anmeldenummer: 21160214.9
(22) Anmeldetag: 02.03.2021
(51) Int. Cl.: B60M 1/30, B60M 1/34

(54) **STROMSCHIENE FÜR EINE SCHLEIFLEITUNG**
BUSBAR FOR A SLIDING CONTACT LINE
BARRE CONDUCTICE POUR UNE LIGNE DE CONTACT

(30) Priorität: 24.04.2020 DE 102020111272
(43) Veröffentlichungstag der Anmeldung: 27.10.2021
(73) Patentinhaber: Conductix-Wampfler GmbH, 79576 Weil am Rhein (DE)
(72) Erfinder: Seidel, Dieter, 79585 Steinen (DE)
(74) Vertreter: Charrier Rapp & Liebau

(56) Entgegenhaltungen:
- EP-A1- 2 177 777
- EP-B1- 2 691 257
- WO-A1-2015/086286
- DE-A1- 2 852 267
- DE-A1-102007 026 906

## Beschreibung

Die Erfindung betrifft eine Stromschiene für eine Schleifleitung zur elektrischen Versorgung eines längs der Schleifleitung bewegbaren elektrischen Verbrauchers.

Stromschienen von Schleifleitungen unterliegen ebenso wie Schleifkörper von Stromabnehmern im Betrieb eines über eine Schleifleitung mit Strom versorgten beweglichen Verbrauchers einem systembedingten Verschleiß. Durch das Aufbringen eines reibungsmindernd wirkenden Materials auf die im Betrieb einer Schleifleitung in Kontakt mit dem Schleifkörper gelangende Oberfläche einer Stromschiene kann dieser Verschleiß vermindert werden. Hierbei erweist sich aber das Überdeckungsverhältnis zwischen einem Schleifkörper und einer Stromschiene, das im Vergleich zu einem Schleifringkörper sehr gering ist, als Problem, denn die Menge an Schmiermittel, die bei Einsatz eines schmiermittelhaltigen Schleifkörpers pro Längeneinheit der Stromschiene durch Abrieb von dem Schleifkörper auf die Stromschiene aufgebracht werden kann, ist relativ gering.

Eine Möglichkeit zur Aufbringung einer größeren Menge an Schmiermittel ist die Verwendung eines Schleifkörpers aus einem reibungsmindernd wirkenden Material wie Graphit bei der Inbetriebnahme einer Schleifleitung. Ein Großteil eines auf diese Weise zusätzlich aufgebrachten Schmiermittels wird jedoch im Betrieb einer Schleifleitung mit einem Schleifkörper üblicher Art, beispielsweise aus Kupfergraphit, durch den Schleifkörper zu den Enden der Schleifleitung hin weggeschoben und wird dadurch unwirksam.

Die DE 10 2006 031 919 A1 offenbart eine akustische Einrichtung zur Untersuchung eines Fahrdrahtes einer zur elektrischen DC-Energieversorgung eines Schienentriebfahrzeugs bestimmten Oberleitung, wobei zur Minderung des Verschleißes zwischen Fahrdraht und einem Stromabnehmer des Schienentriebfahrzeugs der Fahrdraht mit einem hochstromgeeigneten Schmiermittel versehen ist. Weiter weist die Einrichtung mindestens eine Sende-/Empfangseinheit für Ultraschallstrahlung auf, mit der ein Ultraschallpuls in den Fahrdraht aussendbar und ein vom Fahrdraht reflektierter Anteil dieses Ultraschallpulses empfangbar ist, wobei das Schmiermittel als ultraschalldurchlässiges Koppelmittel zwischen Fahrdraht und Sende-/Empfangseinheit vorgesehen ist.

Die DE 28 52 267 A1 offenbart eine Verbindungsvorrichtung für aus einzelnen Abschnitten bestehende Schleifleitungen mit einer Schleiffläche, mit der ein Schleifkontakt eines Stromabnehmers in Kontakt steht, wobei bei einer Schleifleitung aus einem axial geschlitzten Rohr an jedem Rohrabschnittsende mindestens eine in Umfangsrichtung verlaufende Ausnehmung vorgesehen ist und die aneinander stoßenden Enden benachbarter Abschnitte von einem axial geschnitzten Rohrstück übergriffen werden, das mit mindestens zwei nach innen gerichteten Vorsprüngen versehen ist, die in die Ausnehmungen der beiden Rohrabschnittsenden eingreifen.

Die DE 10 2007 026906 A1 offenbart ein Isolierprofil für eine mehrpolige Schleifleitung, das eine regelmäßige Anordnung von mehreren sich in Längsrichtung des Profils erstreckenden Kammern aufweist. Es ist mindestens eine Gruppe von Kammern vorhanden, die im Querschnitt geschlossen sind, und mindestens eine Gruppe von Kammern, die im Querschnitt nach einer Seite hin offen sind und dadurch eine offene Vorderseite des Isolierprofils definieren, und die zur Halterung jeweils einer Stromschiene geeignet sind. Wandabschnitte mehrerer nebeneinanderliegender geschlossener Kammern bilden zusammen eine der offenen Vorderseite des Isolierprofils gegenüberliegende Rückwand des Isolierprofils. Die geschlossenen Kammern einer ersten Gruppe erstrecken sich von der Rückwand des Profils aus in Richtung zur offenen Vorderseite des Profils bis über die vorgesehene Position der vorderen Oberflächen der Stromschienen in den offenen Kammern hinaus, und jeweils mindestens eine geschlossene Kammer dieser ersten Gruppe ist zwischen zwei benachbarten offenen Kammern angeordnet.

Die EP 2 177 777 A1 offenbart einen Innenring mit einem Ölloch, das sich durch einen Teil zwischen einer Innenringlaufbahnfläche und einer Innenumfangsfläche davon erstreckt, und konfiguriert ist, um Fett, das einem Bereich zwischen der Innenringlaufbahnfläche und einem Außenring zugeführt wurde, zu einer inneren Umfangsfläche entsprechend dem Walzen von Zylinderrollen herauszudrücken. Die Innenumfangsfläche des Innenrings ist mit einer Vielzahl von V-förmigen geneigten Nuten ausgebildet, die so konfiguriert sind, dass sie das Fett, das durch das Ölloch zur Innenumfangsfläche des Innenrings herausgedrückt wurde, zu gegenüberliegenden Endabschnitten der Innenumfangsfläche in einer axialen Richtung des Innenrings zu leiten.

Die WO 2015/086286 A1 offenbart eine Schmiervorrichtung zum Schmieren der zur Aufnahme eines Fahrdrahts vorgesehenen Kontaktbereiche einer Nut einer Stromschiene mit einem Schmierstoff, umfassend ein Führungsmittel zum Führen der Schmiervorrichtung entlang der Stromschiene und eine Schmierstoffabgabeeinrichtung, die geeignet ist, im an die Stromschiene angebrachten Zustand der Schmiervorrichtung an die Kontaktbereiche der Stromschiene den Schmierstoff abzugeben.

Die EP 2 691 257 B1 offenbart eine spurbezogene Materialstruktur, die dazu bestimmt ist, mindestens einen Wandabschnitt innerhalb einer langgestreckten Spur oder eines Schlitzes entlang eines oder mehrerer Straßenabschnitte zu bilden, wobei die Spur auf ihrem der Fahrbahn zugewandten oberen Endabschnitt ein Masseanschluss ist, und an ihrem der Fahrbahn zugewandten unteren Endabschnitt ein oder mehrere elektrisch bestrombare und erregbare Leiter zugeordnet sind, wobei die Materialstruktur elektrisch isolierend und zu dem mindestens einen Wandabschnitt des Gleises ausgerichtet und angeordnet ist, um elektrisch und mechanisch mit der Erdverbindung zusammenzuwirken.

Die EP 876 865 A2 offenbart zylinderförmige Metallteile mit Nuten zur Schmierung oder Gasabführung, wozu die Teile mindestens eine auf ihrer Oberfläche ausgebildete Spiralnut aufweisen.

Aufgabe der Erfindung ist es deshalb, bei einer Schleifleitung den Verschleiß der Stromschiene und des Schleifkörpers durch Verminderung der Reibung zwischen diesen beiden Komponenten zu reduzieren.

Die Erfindung löst diese Aufgabe durch eine Stromschiene mit den Merkmalen des Anspruchs 1. Vorteilhafte Weiterbildungen und Ausgestaltungen der Erfindung sind in den Unteransprüchen angegeben.

Erfindungsgemäß weist bei einer Stromschiene für eine Schleifleitung zur elektrischen Versorgung eines längs der Schleifleitung bewegbaren elektrischen Verbrauchers die Oberfläche der zum Kontakt mit einem Schleifkörper eines Stromabnehmers vorgesehenen Seite der Stromschiene mindestens eine rillenförmige Vertiefung auf, die zumindest abschnittsweise schräg zu der durch die vorgesehene Laufrichtung des Schleifkörpers definierten Längsrichtung der Stromschiene verläuft. Hierbei ist mit abschnittsweise schräg gemeint, dass die Vertiefung entlang eines Teils ihrer Länge schräg verläuft. Eine solche Vertiefung bildet ein Reservoir für ein Schmiermittel, das beispielsweise staubförmig sein kann, und behindert den Austrag eines solchen Schmiermittels an die Enden der Stromschiene durch das Gleiten des Schleifkörpers auf der ihr zugewandten Kontaktfläche der Stromschiene. Durch die Zurückhaltung von Schmiermittel auf der Stromschiene in der Vertiefung wird der reibungsbedingte Verschleiß an der Stromschiene und am Schleifkörper reduziert.

Eine bevorzugte Ausführungsform einer erfindungsgemäßen Vertiefung besteht darin, dass sich diese kontinuierlich entlang eines zusammenhängenden Abschnitts einer Stromschiene erstreckt. Eine solche Form einer Vertiefung eignet sich besonders gut zur Herstellung in einem kontinuierlichen Durchlaufprozess zusammen mit der Profilierung der Stromschiene. Vorzugsweise verläuft die Vertiefung in Längsrichtung der Stromschiene periodisch, was für eine gleichmäßige Wirkung der Vertiefung in Längsrichtung der Stromschiene sorgt.

Eine zweckmäßige Form der Vertiefung in der Draufsicht ist die Form einer Schlangenlinie mit einer Vielzahl von gleichmäßigen runden Schleifen, die sich von der Längsmittelachse der Stromschiene aus abwechselnd in entgegengesetzte Richtungen erstrecken. Beispielsweise kann die Vertiefung in der Draufsicht zumindest näherungsweise sinusförmig sein oder aus einer kontinuierlichen Abfolge von miteinander zusammenhängenden Kreisbögen mit gleichem Radius bestehen. Hierdurch ergibt sich ein insgesamt symmetrischer Verlauf der Vertiefung bezüglich der Längsmittelachse.

Eine andere zweckmäßige Form der Vertiefung in der Draufsicht ist die Form einer Zickzacklinie mit einer Vielzahl von geraden Abschnitten, welche die Längsmittelachse der Stromschiene abwechselnd in entgegengesetzter Richtung kreuzen. Hierbei haben die geraden Abschnitte der Zickzacklinie vorzugsweise alle die gleiche Länge und kreuzen die Längsmittelachse der Stromschiene in einem Winkel von gleichem Betrag. Hierdurch ergibt sich ein symmetrischer Verlauf der Zickzacklinie bezüglich der Längsmittelachse.

Alternativ zu einer einzigen kontinuierlichen Vertiefung kann ein zusammenhängender Abschnitt der Stromschiene auch eine Vielzahl von separaten Vertiefungen aufweisen. Die erfindungsgemäße Wirkung ist auch hiermit erzielbar, wenn die Vertiefungen zumindest abschnittsweise schräg zur Längsrichtung der Stromschiene verlaufen. Vorzugsweise haben die Vertiefungen in diesem Fall eine gleiche Form und sind in Längsrichtung der Stromschiene zueinander äquidistant angeordnet. Eine besonders einfache und zweckmäßige Realisierung solcher separater Vertiefungen besteht darin, dass sie in der Draufsicht geradlinig und parallel zueinander schräg zur Längsmittelache der Stromschiene verlaufen.

Die Vertiefung oder Vertiefungen kann bzw. können eine V-förmige oder an ihrem Grund abgerundete Querschnittsform haben und ist bzw. sind vorzugsweise durch den Formungsprozess der Stromschiene in diese eingearbeitet, wodurch zusätzliche Kosten durch eine nachträgliche Herstellung vermieden werden. Ein solcher Formungsprozess ist insbesondere dann nötig, wenn die Stromschiene eine gewölbte Querschnittsform hat und die zum Kontakt mit einem Schleifkörper eines Stromabnehmers vorgesehene Seite die konkave Seite ist. Diese Querschnittsform ist besonders zweckmäßig, weil sie für eine für eine Selbstzentrierung des Schleifkörpers des Stromabnehmers in lateraler Richtung sorgt und einem Entweichen von Schmiermittel von der Stromschiene in lateraler Richtung entgegenwirkt.

Die Erfindung wird nachfolgend anhand von detaillierten Ausführungsbeispielen mit Bezug auf die begleitenden Zeichnungen beschrieben. Diese zeigen:
- Fig. 1: eine dreidimensionale Schrägansicht einer ersten Ausführungsform einer erfindungsgemäßen Stromschiene,
- Fig. 2: eine Draufsicht auf die Kontaktfläche der Stromschiene von Fig. 1,
- Fig. 3: einen Längsschnitt durch Fig. 2 entlang der Linie A-A
- Fig. 4: eine dreidimensionale Schrägansicht einer zweiten Ausfiihrungsform einer erfindungsgemäßen Stromschiene,
- Fig. 5: eine Draufsicht auf die Kontaktfläche der Stromschiene von Fig. 4,
- Fig. 6: einen Längsschnitt durch Fig. 2 entlang der Linie B-B
- Fig. 7: eine dreidimensionale Schrägansicht einer dritten Ausfiihrungsform einer erfindungsgemäßen Stromschiene,
- Fig. 8: eine Draufsicht auf die Kontaktfläche der Stromschiene von Fig. 7,
- Fig. 9: einen Längsschnitt durch Fig. 2 entlang der Linie C-C.

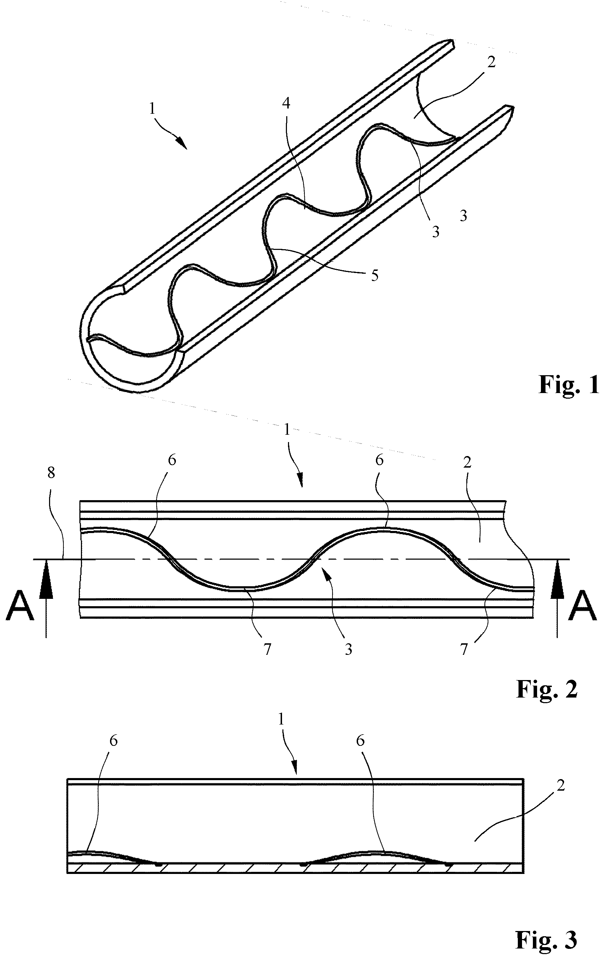

Fig. 1 zeigt eine dreidimensionale Schrägansicht einer ersten Ausfiihrungsform einer erfindungsgemäßen Stromschiene 1 für eine Schleifleitung zur Versorgung eines beweglichen elektrischen Verbrauchers. Die Stromschiene 1 besteht aus einem Metallband mit einer gewölbten Querschnittsform, die insbesondere durch Rollformen herstellbar ist. Der Querschnitt hat in dem gezeigten Beispiel die Form eines Segments eines Hohlzylinders, das sich über einen Winkel von mehr als 180° erstreckt. Die Oberfläche 2 der konkaven Seite der Stromschiene 1 ist die Kontaktfläche der Stromschiene 1, d.h. sie wird im Betrieb durch einen in den Figuren nicht gezeigten Schleifkörper eines Stromabnehmers des Verbrauchers kontaktiert.

Zur Verringerung der Reibung beim Gleiten des Schleifkörpers auf der Oberfläche 2 der Stromschiene 1 weist diese Oberfläche 2 eine rillenförmige Vertiefung 3 auf, die dazu bestimmt ist, einen Teil eines auf die Oberfläche 2 aufgebrachten Schmiermittels aufzunehmen und den durch das Gleiten des Schleifkörpers auf der Oberfläche 2 bewirkten Vorschub des Schmiermittels in der Längsrichtung der Stromschiene 1, welche die Laufrichtung des Schleifkörpers ist, zu reduzieren. Hierzu verläuft die rillenförmige Vertiefung 3 zumindest teilweise schräg zur Längsrichtung der Stromschiene 1. Dies bewirkt, dass schmiermittelhaltiger Staub, der bei einer Überfahrt des Schleifkörpers aus einem schrägen Abschnitt 4 der Vertiefung 3 austritt, sich zumindest teilweise in dem in der Bewegungsrichtung des Schleifkörpers nächsten schrägen Abschnitt 5 der Vertiefung 3 wieder einlagert, wodurch der Transport von Schmiermittel aus der Stromschiene 1 heraus zu ihren Enden im Betrieb der Schleifleitung verlangsamt wird.

Hierbei ist es wesentlich, dass die Vertiefung 3 schräg zur Längsrichtung der Stromschiene 1 verlaufende Abschnitte wie die in Fig. 1 gekennzeichneten Abschnitte 4 und 5 aufweist. Eine parallel zu besagter Längsrichtung verlaufende rillenförmige Vertiefung hätte nicht die erfindungsgemäß beabsichtigte Wirkung eines Reservoirs von Schmiermittel, welches den Vorschub von Schmiermittel durch den Schleifkörper in Längsrichtung behindert. Andererseits sollte die Vertiefung 3 auch nicht quer zur Bewegungsrichtung des Schleifkörpers liegen, da in diesem Fall innerhalb der Vertiefung nahezu keine Verschiebung des Schmiermittels durch den Schleifkörper in dessen Bewegungsrichtung möglich wäre, was potentiell zu Unebenheiten der Oberfläche 2 durch einen Aufwurf von Schmiermittel an solchen quer zur Bewegungsrichtung des Schleifkörpers verlaufenden Vertiefungen führen könnte.

Eine Draufsicht auf die Kontaktfläche der Stromschiene 1, welche durch die Oberfläche 2 gebildet wird, zeigt Fig. 2. Dort ist wie auch bereits in Fig. 1 erkennbar, dass bei dieser Ausführungsform der Erfindung eine kontinuierliche rillenförmige Vertiefung 3 vorgesehen ist, die sich über einen Abschnitt der Stromschiene 1 in deren Längsrichtung erstreckt und aus Abschnitten besteht, deren Form sich in Längsrichtung der Stromschiene 1 periodisch wiederholt. Die allgemeine Form der Vertiefung 3 ist die einer Schlangenlinie mit einer Vielzahl von gleichmäßigen abgerundeten Schleifen 6 und 7, die sich von der Längsmittelachse 8 der Stromschiene 1 aus abwechselnd in entgegengesetzte Richtungen erstrecken. Diese Schlangenlinie kann in der Ansichtsrichtung von Fig. 2 beispielsweise näherungsweise eine Sinusform haben oder die einzelnen Schleifen 6 und 7 können die Form von Kreisbögen mit gleichem Radius haben, die kontinuierlich ineinander übergehen. Wie aus Fig. 2 ersichtlich ist, verläuft die Vertiefung 3 vorzugsweise symmetrisch zur Längsmittelachse 8 der Stromschiene 1.

Fig. 3 zeigt eine Längsschnittansicht entlang der Linie A-A von Fig. 2, welche die Längsmittelachse 8 der Stromschiene 1 und die Mittellinie der Oberfläche 2 darstellt. Wie in Fig. 3 ebenso wie bereits in Fig. 1 erkennbar ist, erstrecken sich die Schleifen 6 der Vertiefung 3 aufgrund der konkaven Wölbung der Stromschiene 1 von deren Längsmittelachse 8 aus nicht nur seitwärts, sondern auch etwas nach oben, indem sie der konkaven Wölbung folgen. Gleiches gilt auch für die in der Ansichtsrichtung von Fig. 3 nicht sichtbaren anderen Schleifen 7. Die Vertiefung 3 verläuft also nicht in einer Ebene, sondern in ihrer eigenen Längsrichtung dreidimensional.

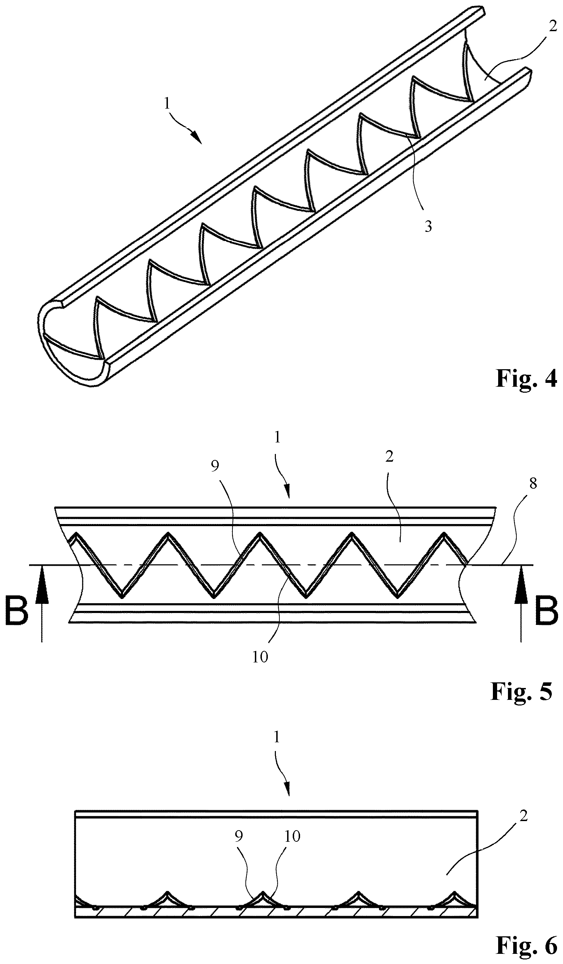

Die Figuren 4 bis 6 zeigen eine zweite Ausführungsform einer erfindungsgemäßen Stromschiene 1 in den gleichen Ansichten, wie die Figuren 1 bis 3 die erste Ausführungsform zeigen. Die zweite Ausführungsform unterscheidet sich von der ersten nur in der Form der Vertiefung 3, weshalb hier nur dieser Unterschied erläutert wird. Die Form ist bei der zweiten Ausführungsform eine Zickzack-Linie. Sie besteht aus einer Vielzahl von geraden Abschnitten 9 und 10, welche die Längsmittelachse 8 der Stromschiene 1 abwechselnd in entgegengesetzter Richtung kreuzen und an ihren Enden zusammenhängend ineinander übergehen.

Wie Fig. 5 zeigt, verläuft die Vertiefung 3 auch in der zickzackförmigen Ausführung vorzugsweise symmetrisch zur Längsmittelachse 8 der Stromschiene 1. Auch hier ist die Form der Vertiefung 3 dreidimensional, d.h. sie folgt der konkaven Wölbung der Stromschiene 1, wie aus Fig. 6 ersichtlich ist. Wesentlich ist, dass die einzelnen Abschnitte der Vertiefung 3 auch hier schräg zur Längsrichtung der Stromschiene 1, welche die Bewegungsrichtung des Schleifkörpers des Stromabnehmers ist, verlaufen. In diesem Fall ist sogar der Winkel zwischen der Längsmittelachse 8 der Stromschiene 1 und der Vertiefung 3 dem Betrag nach überall gleich, während der Betrag dieses Winkels bei der ersten Ausführungsform entlang der Vertiefung 3 kontinuierlich zwischen Null und einem Maximalwert variiert.

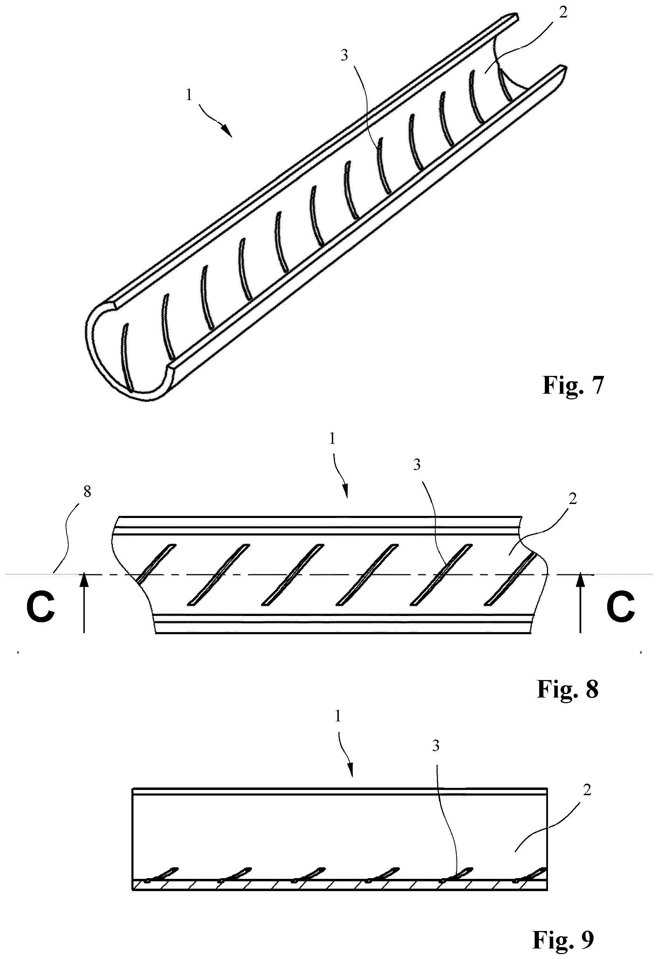

Die Figuren 7 bis 9 zeigen eine dritte Ausführungsform einer erfindungsgemäßen Stromschiene 1 in den gleichen Ansichten, wie die Figuren 1 bis 3 die erste und die Figuren 4 bis 6 die zweite Ausfiihrungsform zeigen. Die dritte Ausführungsform unterscheidet sich von der ersten und zweiten darin, dass innerhalb eines Abschnitts der Stromschiene 1 anstelle einer einzigen kontinuierlichen Vertiefung 3 mehrere separate Vertiefungen 3 vorgesehen sind, die in Längsrichtung eines zusammenhängenden Abschnitts der Stromschiene 1 äquidistant aufeinanderfolgen. Wie Fig. 8 zeigt, sind die einzelnen Vertiefungen 3 hier in der Draufsicht geradlinig, sie kreuzen die Längsmittelachse 8 der Stromschiene 1 alle unter dem gleichen Winkel und sie erstrecken sich gleich weit zu beiden Seiten der Längsmittelachse 8. Auch hier ist die Form der Vertiefungen 3 dreidimensional, d.h. sie folgt der konkaven Wölbung der Stromschiene 1, wie aus Fig. 9 ersichtlich ist. Die geradlinige Form der Vertiefungen 3 der dritten Ausführungsform ist zwar besonders einfach und daher zweckmäßig, aber nicht die einzig mögliche. So könnten separate Vertiefungen 3 beispielsweise auch sichelförmig oder S-förmig gestaltet sein.

### Bezugszeichenliste

- 1: Stromschiene
- 2: Oberfläche
- 3: Vertiefung
- 4, 5: schräger Abschnitt
- 6,7: Schleife
- 8: Längsmittelachse
- 9, 10: gerader Abschnitt

## Patentansprüche

1. Stromschiene (1) für eine Schleifleitung zur elektrischen Versorgung eines längs der Schleifleitung bewegbaren elektrischen Verbrauchers, **dadurch gekennzeichnet, dass** die Oberfläche (2) der zum Kontakt mit einem Schleifkörper eines Stromabnehmers vorgesehenen Seite der Stromschiene (1) mindestens eine rillenförmige Vertiefung (3) aufweist, die zumindest abschnittsweise schräg zu der durch die vorgesehene Laufrichtung des Schleifkörpers definierten Längsrichtung der Stromschiene (1) verläuft.

2. Stromschiene (1) nach Anspruch 1, **dadurch gekennzeichnet, dass** sich eine Vertiefung (3) kontinuierlich entlang eines zusammenhängenden Abschnitts einer Stromschiene (1) erstreckt.

3. Stromschiene (1) nach Anspruch 2, **dadurch gekennzeichnet, dass** die Vertiefung (3) in Längsrichtung der Stromschiene (1) periodisch verläuft.

4. Stromschiene (1) nach Anspruch 3, **dadurch gekennzeichnet, dass** die Vertiefung (3) in der Draufsicht die Form einer Schlangenlinie mit einer Vielzahl von gleichmäßigen runden Schleifen (6, 7) hat, die sich von der Längsmittelachse (8) der Stromschiene (1) aus abwechselnd in entgegengesetzte Richtungen erstrecken.

5. Stromschiene (1) nach Anspruch 4, **dadurch gekennzeichnet, dass** die Vertiefung (3) in der Draufsicht zumindest näherungsweise sinusförmig ist oder aus einer kontinuierlichen Abfolge von miteinander zusammenhängenden Kreisbögen mit gleichem Radius besteht.

6. Stromschiene (1) nach Anspruch 3, **dadurch gekennzeichnet, dass** die Vertiefung (3) in der Draufsicht die Form einer Zickzacklinie mit einer Vielzahl von geraden Abschnitten (9, 10) hat, welche die Längsmittelachse (8) der Stromschiene (1) abwechselnd in entgegengesetzter Richtung kreuzen

7. Stromschiene (1) nach Anspruch 6, **dadurch gekennzeichnet, dass** die geraden Abschnitte (9, 10) der Zickzacklinie alle die gleiche Länge haben und die Längsmittelachse (8) der Stromschiene (1) in einem Winkel von gleichem Betrag kreuzen.

8. Stromschiene (1) nach Anspruch 1, **dadurch gekennzeichnet, dass** ein zusammenhängender Abschnitt der Stromschiene (1) eine Vielzahl von separaten Vertiefungen (3) aufweist.

9. Stromschiene nach Anspruch 8, **dadurch gekennzeichnet, dass** die separaten Vertiefungen (3) eine gleiche Form haben und in Längsrichtung der Stromschiene (1) zueinander äquidistant angeordnet sind.

10. Stromschiene nach Anspruch 8, **dadurch gekennzeichnet, dass** die Vertiefungen in der Draufsicht geradlinig und parallel zueinander schräg zur Längsmittelache (8) der Stromschiene (1) verlaufen.

11. Stromschiene (1) nach einem der Ansprüche 1 bis 10, **dadurch gekennzeichnet, dass** die Vertiefung (3) oder Vertiefungen (3) eine V-förmige oder an ihrem Grund abgerundete Querschnittsform hat bzw. haben.

12. Stromschiene nach einem der Ansprüche 1 bis 11, **dadurch gekennzeichnet, dass** die Vertiefung (3) oder Vertiefungen (3) durch den Formungsprozess der Stromschiene (1) in diese eingearbeitet ist bzw. sind.

13. Stromschiene nach einem der Ansprüche 1 bis 12, **dadurch gekennzeichnet, dass** die Stromschiene (1) eine gewölbte Querschnittsform hat und die zum Kontakt mit einem Schleifkörper eines Stromabnehmers vorgesehene Seite die konkave Seite ist.

## Claims

1. Busbar (1) for a conductor rail for electrical supply of an electrical load which is movable along the conductor rail, **characterised in that** the surface (2) of the side of the busbar (1) intended to make contact with a sliding body of a current collector has at least one groove-like depression (3) which, at least in sections, runs obliquely to the longitudinal direction of the busbar (1) defined by the intended direction of movement of the sliding body.

2. Busbar (1) according to claim 1, **characterised in that** a depression (3) extends continuously along a connected section of a busbar (1).

3. Busbar (1) according to claim 2, **characterised in that** the depression (3) runs periodically in the longitudinal direction of the busbar (1).

4. Busbar (1) according to claim 3, **characterised in that** in plan view the depression (3) has the shape of a sinuous line with a plurality of uniform round bends (6, 7) which extend starting from the longitudinal centre axis (8) of the busbar (1) alternately in opposite directions.

5. Busbar (1) according to claim 4, **characterised in that** in plan view the depression (3) is at least approximately sinusoidal or consists of a continuous sequence of circular arcs of the same radius connected to one another.

6. Busbar (1) according to claim 3, **characterised in that** in plan view the depression (3) has the shape of a zigzag line with a plurality of straight sections (9, 10) which cross the longitudinal centre axis (8) of the busbar (1) alternately in opposite direction.

7. Busbar (1) according to claim 6, **characterised in that** the straight sections (9, 10) of the zigzag line all have the same length and cross the longitudinal centre axis (8) of the busbar (1) at the same angular measure.

8. Busbar (1) according to claim 1, **characterised in that** the connected section of the busbar (1) has a plurality of separate depressions (3).

9. Busbar according to claim 8, **characterised in that** the separate depressions (3) have the same shape and in the longitudinal direction of the busbar (1) are arranged equidistantly from one other.

10. Busbar according to claim 8, **characterised in that** in plan view the depressions run in a straight line and parallel to one other obliquely to the longitudinal centre axis (8) of the busbar (1).

11. Busbar (1) according to one of claims 1 to 10, **characterised in that** the depression (3) or depressions (3) has or have a V-shaped cross-sectional shape or one rounded off at its/their base.

12. Busbar according to one of claims 1 to 11, **characterised in that** the depression (3) or depressions (3) is or are incorporated into the busbar (1) by the moulding process of the latter.

13. Busbar according to one of claims 1 to 12, **characterised in that** the busbar (1) has a curved cross-sectional shape and the side intended to make contact with a sliding body of a current collector is the concave side.

## Revendications

1. Barre omnibus (1) pour une ligne de contact pour l'alimentation électrique d'un consommateur électrique pouvant être déplacé le long de la ligne de contact, **caractérisée en ce que** la surface (2) du côté, prévu pour venir en contact avec un corps de contact d'un collecteur de courant, de la barre omnibus (1) présente au moins un renfoncement (3) en forme de nervure, qui s'étend au moins par endroits à l'oblique par rapport au sens longitudinal, défini par le sens de défilement prévu du corps de contact, de la barre omnibus (1).

2. Barre omnibus (1) selon la revendication 1, **caractérisée en ce qu'**un renfoncement (3) s'étend en continu le long d'une section contiguë d'une barre omnibus (1).

3. Barre omnibus (1) selon la revendication 2, **caractérisée en ce que** le renfoncement (3) s'étend de manière périodique dans le sens longitudinal de la barre omnibus (1).

4. Barre omnibus (1) selon la revendication 3, **caractérisée en ce que** le renfoncement (3) a, vu d'en haut, la forme d'une ligne sinueuse avec une pluralité de boucles (6, 7) rondes homogènes, qui s'étendent depuis l'axe central longitudinal (8) de la barre omnibus (1) en alternance dans des directions opposées.

5. Barre omnibus (1) selon la revendication 4, **caractérisée en ce que** le renfoncement (3) est au moins approximativement de forme sinueuse vu d'en haut ou est constitué d'une succession continue d'arcs de cercle contigus les uns avec les autres avec un rayon identique.

6. Barre omnibus (1) selon la revendication 3, **caractérisée en ce que** le renfoncement (3) a, vu d'en haut, la forme d'une ligne en zigzag avec une pluralité de sections droites (9, 10), lesquelles croisent en alternance dans une direction opposée l'axe central longitudinal (8) de la barre omnibus (1).

7. Barre omnibus (1) selon la revendication 6, **caractérisée en ce que** les sections droites (9, 10) de la ligne en zigzag ont toutes la même longueur et croisent l'axe central longitudinal (8) de la barre omnibus (1) selon un angle de même valeur.

8. Barre omnibus (1) selon la revendication 1, **caractérisée en ce qu'**une section contiguë de la barre omnibus (1) présente une pluralité de renfoncements (3) séparés.

9. Barre omnibus selon la revendication 8, **caractérisée en ce que** les renfoncements (3) séparés ont une forme identique et sont disposés de manière équidistante les uns par rapport aux autres dans le sens longitudinal de la barre omnibus (1).

10. Barre omnibus selon la revendication 8, **caractérisée en ce que** les renfoncements s'étendent, vus d'en haut, de manière rectiligne et à l'oblique par rapport à l'axe central longitudinal (8) de la barre omnibus (1) de manière parallèle les uns par rapport aux autres.

11. Barre omnibus (1) selon l'une quelconque des revendications 1 à 10, **caractérisée en ce que** le renfoncement (3) ou les renfoncements (3) a ou ont une forme de section transversale en V ou arrondie sur sa base.

12. Barre omnibus selon l'une quelconque des revendications 1 à 11, **caractérisée en ce que** le renfoncement (3) ou les renfoncements (3) est pratiqué ou sont pratiqués dans la barre omnibus (1) par le processus de mise en forme de celle-ci.

13. Barre omnibus selon l'une quelconque des revendications 1 à 12, **caractérisée en ce que** la barre omnibus (1) a une forme de section transversale bombée et le côté prévu pour venir en contact avec un corps de contact d'un collecteur de courant est le côté concave.
